Europäisches Patentamt

European Patent Office

Office européen des brevets

(11) Publication number:

**0 081 933**
**B1**

(12) **EUROPEAN PATENT SPECIFICATION**

(45) Date of publication of patent specification: **26.02.86**

(21) Application number: **82306261.7**

(22) Date of filing: **24.11.82**

(51) Int. Cl.⁴: **G 11 B 23/02**

(54) Tape cassette cases.

(30) Priority: **15.12.81 JP 187038/81**

(43) Date of publication of application:
**22.06.83 Bulletin 83/25**

(45) Publication of the grant of the patent:
**26.02.86 Bulletin 86/09**

(84) Designated Contracting States:
**AT DE FR GB NL**

(56) References cited:
**FR-A-2 198 210**
**FR-A-2 339 041**
**GB-A-2 022 555**
**US-A-4 011 940**
**US-A-4 078 657**
**US-A-4 235 334**

(73) Proprietor: **SONY CORPORATION**
**7-35 Kitashinagawa 6-Chome Shinagawa-ku**
**Tokyo 141 (JP)**

(72) Inventor: **Takahashi, Kenji c/o Patent Division**
**Sony Corporation 7-35 Kitashinagawa-6**
**Shinagawa-ku Tokyo (JP)**

(74) Representative: **Thomas, Christopher Hugo**
**et al**
**D Young & Co 10 Staple Inn**
**London WC1V 7RD (GB)**

Courier Press, Leamington Spa, England.

# Description

This invention relates to tape cassette cases.

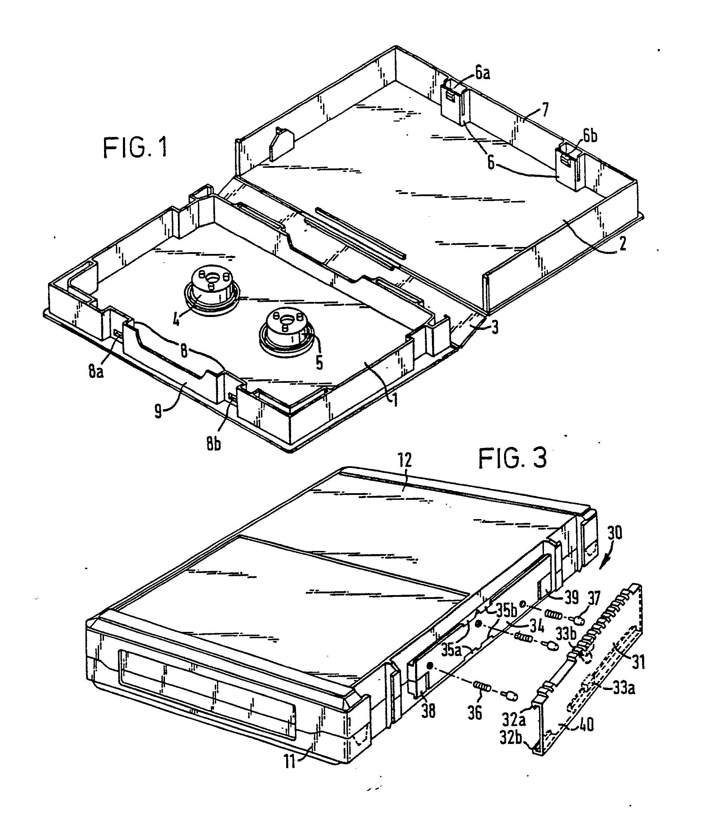

Tape cassette cases for storing magnetic tape cassettes so as to protect the cassettes from dust and humidity are known for example from our UK patent specification GB—A—2 022 555, the case described therein being illustrated in Figure 1 of the accompanying drawings. In Figure 1, a cassette case comprises a main wall 1 and a cover wall 2, hingedly connected by an end wall 3. Secured to the main wall 1 is an identical pair of reel lock members 4 and 5, which engage the reels of the cassette when it is placed into the case, so that unwinding of the cassette reels does not occur. The case, which is made from a resilient material, is provided with a pair of releasable locking arrangements comprising a pair of rectangular assemblies 6 mounted on a peripheral wall 7 extending from the cover wall 2, and a pair of corresponding recesses 8 formed in a peripheral wall 9 extending from the main wall 1. Each of the rectangular assemblies 6 has a respective protrusion 6a and 6b thereon, and each of the recesses 8 has a respective aperture 8a and 8b corresponding to the protrusions 6a and 6b respectively. The apertures 8a and 8b are arranged to receive the protrusions 6a and 6b, so that when the case is in the process of being closed, the protrusions 6a and 6b slide over the recesses 8 in the peripheral wall 9 and become inserted into the apertures 8a and 8b, thereby. locking the case. The case may be unlocked by exerting a separating force on the main and cover walls 1 and 2 to urge the protrusions 6a and 6b out of the apertures 8a and 8b.

The peripheral walls 7 and 9 extend from the main wall 1 and the cover wall 2 respectively, so that, when the case is closed, the peripheral wall 7 slides over the outwardly facing surface of the peripheral wall 9 so as to provide a seal to reduce dust and other particles entering the closed case and being deposited on the tape housed in the cassette placed within.

The above-described tape cassette case has the disadvantage that the locking arrangement for securing the case closed is not sufficiently secure to prevent the case from opening by accident, therefore, putting the safety of the cassette at risk. Furthermore, the locking arrangement of the above-described case, is only operable if the peripheral walls 7 and 9 of the case are made from a material sufficiently flexible and resilient for the above-mentioned locking arrangement to work, thus imposing a constraint on the strength of the case as well as a constraint on the security of the locking arrangement itself. Due to the flexibility of the peripheral walls 7 and 9, and the fact that they overlap when the case is closed, small gaps exist in the seal formed between them, the gaps being sufficiently large for dust and humidity to enter.

Some of these problems are overcome in the tape cassette case disclosed in French patent specification FR—A—2 339 041, which has a slidable lock element which additionally can be manually rotated to inhibit accidental sliding of the lock element.

It is known (FR—A—2 198 210) to provide cases for storing tape cassettes with facilities which enable them to be stacked conveniently and securely. An embodiment of the invention allows safe transportation of such stacked cases while ensuring that cassettes stored within them are protected.

According to the present invention there is provided a tape cassette case suitable for storing a tape cassette, the tape cassette case comprising:

a main wall, a cover wall and peripheral walls which extend from at least part of the periphery of each of the main and cover walls, the walls being closable to form an enclosure defined by the main wall, the cover wall and the peripheral walls;

a hinge means forming a back wall, and connecting a part of the periphery of the main wall to part of the periphery of the cover wall;

a locking means disposed on the peripheral walls of the main wall and the cover wall, at a location opposite to the hinge means, the locking means comprising a slider member which is slidably mounted on one peripheral wall, and at least one projecting member projecting from the other peripheral wall, so that when the case is closed, the slider member can be slid in one sliding direction to engage with the at least one projecting member thereby locking the main and the cover walls together, the slider member being slidable oppositely to the one sliding direction to disengage the slider member from the at least one projecting member, thereby allowing the case to be opened; and

lock securing means to prevent the slider member from being slid inadvertently;

characterised in that:

the slider member is biased away from said one peripheral wall by a spring means disposed between the slider member and said one peripheral wall; and

said lock securing means engages automatically when the slider member is biased away from said one peripheral wall, so that the slider member can only be slid, in order to engage or disengage the at least one projecting member, when the slider member is pushed in a direction opposite to said biasing direction.

A tape cassette case embodying this invention and as described hereinbelow, is suitable for transporting a video tape cassette, for example, a Sony U-matic cassette. The sliding lock mechanism enables secure locking to be effected while enabling the case to be strongly constructed. Means may also be provided for enabling a plurality of cases to be safely stacked, one on top of the other, thereby simplifying the transportation of a plurality of tape cassette cases.

The invention will now be described by way of example with reference to the accompanying drawings, in which:

Figure 1 is a perspective view of a tape cassette case known in the art;

Figure 2 is a perspective view of a tape cassette case, embodying this invention, shown in an opened position and showing an exploded view of two reel lock members, and of a locking means;

Figure 3 is a perspective view of the tape cassette case of Figure 2, when in a closed position, also showing an exploded view of the locking means;

Figure 4 is a sectional view showing a lock securing means, in which a post of the slider member is engaged and disengaged with a support member;

Figure 5 is a sectional view showing interlocking of shoulders provided on peripheral walls of the case;

Figure 6 is a perspective view of the case, when in a closed position, showing guide members which provide a means for securing a plurality of cases together; and

Figure 7 is a perspective view of a transporting apparatus, which is insertable into the guide members, and provides a means for transporting one or more tape cassette cases.

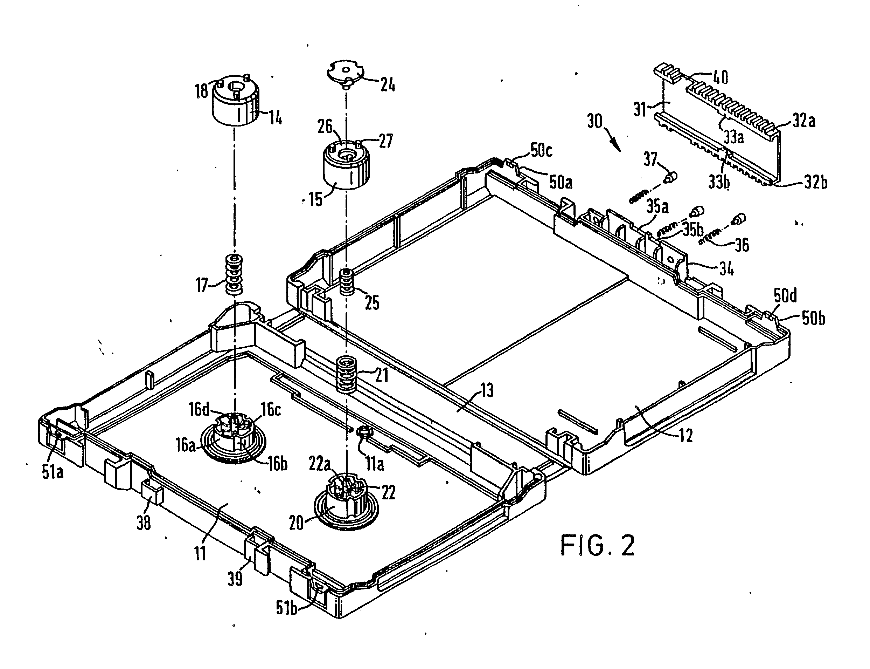

Referring to Figure 2, a tape cassette case for storing a tape cassette is shown in an open position, the case having a main wall 11 and a cover wall 12 hingedly connected by a back wall 13. The main wall 11, the cover wall 12 and the back wall 13 are, for example, moulded integrally from a plastics material. A hinge at each junction between the main wall 11 and the back wall 13 and the cover wall 12 and the back wall 13 is in the form of a valley formed in the plastics material, and each hinge comprises two bevelled edges at an angle of about 45° relative to the respective walls, and can be brought into mating relation when the case is closed. An arrangement of projections 11a, formed in the main walls 11, provide a means for receiving and supporting a plug (not shown). The plug is suitable for insertion into a cassette where its presence prevents the cassette from inadvertently being erased or recorded onto.

A take-up reel lock member 14 and a supply-reel lock member 15 extend upwardly from the main wall 11, and are arranged so that when a cassette is placed into the case, the take-up reel lock member 14 engages with the take-up reel of the cassette, and the supply-reel lock member 15 engages with the supply-reel of the cassette. The lock member 14 prevents lateral movement of the cassette within the case, and prevents the take-up reel from freely rotating. If the cassette is a video cassette, it is important that the tape which is stored therein is prevented from spilling out from the cassette housing. The lock member 14 which is similar to a hub engaging member as described in UK 2 022 555, will be briefly described below. The lock member 14 comprises a support member 16a secured to the main wall 11. The lock member 14 is mounted over the support member 16a so that it is slidable in a vertical direction, but is prevented from rotating about the support member 16a, by means of projections (not shown) projecting from the inner circumferential surface of the lock member 14, which projections are guided by grooves 16b in the support member 16a. A guide post 16c extends upwardly from the central area of the support member 16a, over which a coil spring 17 is located. The lock member 14 is mounted over the coil spring 17 which exerts an upward biasing force when the lock member 14 is held in an assembled position, that is, so that upward displacement is limited, by means of catches 16d formed on the guide post 16c. As shown in Figure 2, the lock member 14 is provided with three engaging protrusions 18, extending upwardly, and are inserted into drive holes provided in the hub of the take-up reel of the cassette when the cassette is placed into the case, so that tape spillage is prevented.

The lock member 15 is mounted over a support member 20 similar to the support member 16a described hereinabove. The lock member 15 is biased upwardly from the support member 20 by means of a coil spring 21, but instead of being held in an assembled position by means of catches in the top portion of a centrally disposed post 22, the member 15 is held by a reel lifter 24. The reel lifter 24 is mounted over the post 22 and biased upwardly by means of a coil spring 25, but held so that upward displacement is limited by means of catches 22a in the top of the post 22. The lock member 15 is biased upwardly so that the reel lifter 24 rests in a recess 26 in the lock member 15. Protrusions 27 project outwardly in a similar way to the protrusions 18 from the lock member 14. The protrusions 27 pass through cut-outs in the reel lifter 24 so that when a cassette is placed into the case, the hub of the supply reel is lifted, engaged and prevented from rotating by the protrusions 27.

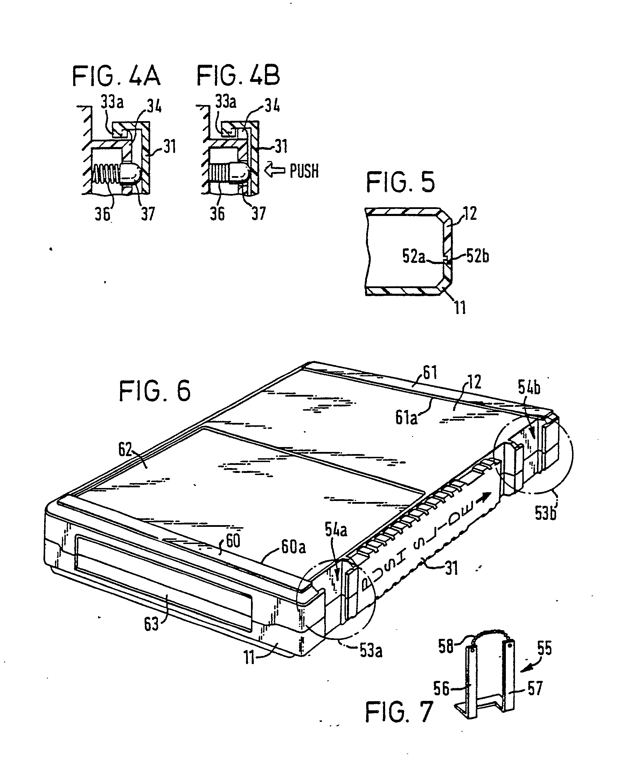

A locking means 30 will now be described with reference to Figures 2 and 3. The locking means 30 comprises a slider member 31 having a pair of flanges 32a and 32b, which extend along the periphery of sides of the slider member 31 which are parallel to a sliding direction, and from each of which extends a post 33a and 33b respectively. As can be seen from Figure 3, the flanges 32a and 32b are engageable with the periphery of a support member 34 so that the slider member 31 is slidable thereon. The support member 34 has two pairs of cut-outs 35a and 35b which receive the posts 33a and 33b when the case is in an unlocked and locked state respectively. The lengths of the slider member 31 and the support member 34 in the sliding direction are the same, and when the case is in a closed and locked state, the posts 33a and 33b are aligned with the cut-outs 35b, and they are inserted through the cut-outs 35b due to the fact that the slider member 31 is biased away from the support member 34 in a direction perpendicular to the sliding direction by means of coil springs 36. Similarly, when the case is in an unlocked or open state, the posts 33a and 33b are aligned with, and inserted through, the cut-outs 35a. One end of the coil springs 36 abut against the peripheral wall of the case, and the other ends of the coil springs 36 abut against the slider member 31 via pins 37 made from a wear resistant material, for example, polystyrene. When the case is in a closed state, it can be seen from Figure 3 that projections 38 and 39 projecting from the other peripheral wall, so as to be aligned with the support member 34, are prevented from separating from the support member 34 because they are obstructed by the flange 32b of the slider member 31, so that the case is locked.

In order to open the case it is necessary to separate the main wall 11 and the cover wall 12 by opening them about the hinge means at the back wall 13. This is done by separating the projecting members 38 and 39 away from the support member 34, but to do this, the slider member 31 must be pushed against the biasing direction thereby disengaging the posts 33a and 33b from the cut-outs 35b (see A and B of Figure 4), and then sliding the slider member 31 so that the posts 33a and 33b move towards the cut-outs 35a. By releasing the slider member 31, the coil springs 36 cause the slider member 31 to be biased away from the support member 34 thereby causing the posts 33a and 33b to be inserted into the cut-outs 35a. Hence, the slider member 31 is locked in an open position, and the projection 38 is now aligned with a cut-out 40 in the flange 32b of the slider member 31, and the projecting member 39 is exposed beyond the end of the flange 32b so that the projections 38 and 39 may now be separated away from the support member 34 thereby opening the case. The insertion of the posts 33a and 33b into the cut-outs 35b and 35a respectively, provide a lock securing means whereby the slider member 31 of the locking means is only slidable between the open position and the closed position when it is pushed in a direction opposite to the biasing direction. The lock securing means significantly reduces the possibility of the tape cassette case opening accidently, and so the safety of the cassette placed therein is secured.

Referring back to Figure 2, an additional locking means is provided on the peripheral walls of the main wall 11 and the cover wall 12. The additional locking means comprises a pair of rectangular shaped finger portions 50a and 50b each having a respective projection 50c or 50d formed thereon, and corresponding apertures 51a and 51b each formed in a recess in the peripheral wall of the main wall 11. When the main wall 11 and the cover wall 12 are brought together, the finger portions 50a and 50b slide over the recessed portions of the peripheral wall of the main wall 11, so that when the case is closed, the projections 50c and 50d of the rectangular shaped finger portions 50a and 50b are inserted into the apertures 51a and 51b respectively of the recessed portions respectively. The additional locking means provides a way of maintaining a good contact between the peripheral walls of the main wall 11 and cover wall 12, and assists them to locate one another when the case is closed.

Figure 5 shows a sectional view of interlocking shoulders provided on the peripheral walls of the main wall 11 and the cover wall 12. Along the edge of the peripheral wall of the main wall 11 there is a shoulder 52a which meets a shoulder 52b of the cover wall 12 when the case is closed. The shoulders 52a and 52b abut one another thereby forming an effective seal between the main wall 11 and the cover wall 12 when the case is closed.

Figure 6 shows a perspective view of the case when closed, and illustrates a pair of guide members 53a and 53b located adjacent to the locking means 30. The guide members 53a and 53b comprise channels 54a and 54b, respectively, which pass through the peripheral walls of the main and cover walls 11 and 12. The guide members 53a and 53b are moulded integrally with the peripheral walls, so that a rail may pass through each thereby enabling the tape cassette case to be secured to the rails.

Figure 7 shows a transporting apparatus 55, comprising a pair of side rails 56 and 57 which can slide into the channels 54a and 54b of the guide members 53a and 53b respectively. The side rails 56 and 57 are of such a thickness and width that they can support the tape cassette case via the guide members 53a and 53b, so that a plurality of cases can be stacked, one on top of the other, onto the transporting apparatus 55 thus enabling a plurality of them to be transported conveniently. The transporting apparatus comprises a handle, such as a chain 58, removably attached to the side rails 56 and 57, which provides a means for lifting the apparatus 55.

As can be seen from Figure 6, the outside surface of the cover wall 12 is provided with strips 60, 61 having ridges 60a, 61a respectively. The corresponding surface of the main wall 11 is provided with recesses (not shown) which correspond to the strips 60, 61 and ridges 60a, 61a so that when the cases are stacked, one on top of the other, respective surfaces of the main wall 11 and cover wall 12 interlock with one another thereby preventing the stacked tape cases from sliding relative to one another. Also, there are provided recesses 62 and 63 in the cover wall 12 and peripheral walls respectively into which identification labels may be affixed without obstructing the stacking of the tape cassette cases.

**Claims**

1. A tape cassette case suitable for storing a tape cassette, the tape cassette case comprising:
   a main wall (11), a cover wall (12) and peripheral walls which extend from at least part of the periphery of each of the main and cover walls (11, 12), the walls (11, 12) being closable to form an enclosure defined by the main wall (11), the cover wall (12) and the peripheral walls;
   a hinge means forming a back wall (13), and connecting a part of the periphery of the main wall (11) to part of the periphery of the cover wall (12);
   a locking means (30) disposed on the peripheral walls of the main wall (11) and the cover wall (12), at a location opposite to the hinge means, the locking means (30) comprising a slider member (31) which is slidably mounted on one peripheral wall, and at least one projecting member (38) projecting from the outer peripheral wall, so that when the case is closed, the slider member (31) can be slid in one sliding direction to engage with the at least one projecting member (38) thereby locking the main and the cover walls (11, 12) together, the slider member (31) being slidable oppositely to the one sliding direction to disengage the slider member (31) from the at least one projecting member (38), thereby allowing the case to be opened; and

lock securing means (33a, 33b, 35a, 35b) to prevent the slider member (31) from being slid inadvertently;

characterised in that:

the slider member (31) is biased away from said one peripheral wall by a spring means (36) disposed between the slider member (31) and said one peripheral wall; and

said lock securing means (33a, 33b, 35a, 35b) engages automatically when the slider member (31) is biased away from said one peripheral wall, so that the slider member (31) can only be slid, in order to engage or disengage the at least one projecting member (38), when the slider member (31) is pushed in a direction opposite to said biasing direction.

2. A tape cassette case according to claim 1 wherein the slider member (31) is mounted on a support member (34) which forms part of said one peripheral wall, the slider member (31) being constrained to be slidable on the support member (34) by means of flanges (32a, 32b) on the slider member (31) co-operating with corresponding flanges on the support member (34), the flanges (32a, 32b) forming an integral part of, and extending along the periphery of, the slider member (31) in the sliding direction, and said corresponding flanges on the support member (34) and the flanges (32a, 32b) on the slider member (31) having respective cooperating posts (33a, 33b) and cut-outs (35a, 35b) which engage with one another to prevent sliding of the slider member (31) when the slider member (31) is biased away from said one peripheral wall.

3. A tape cassette case according to claim 1 or claim 2 wherein an additional locking means is provided on the peripheral walls, the additional locking means comprising, a rectangular finger (50a), projecting from one of the peripheral walls and having a projection (50c) formed thereon, the finger (50a) sliding over a recessed portion in the other peripheral wall as the case is closed, so that the projection of the finger (50a) is inserted into an aperture (51a) in the recessed portions on closing of the case.

4. A tape cassette case according to claim 3 wherein the additional locking means is provided at two respective locations on the peripheral walls, each of the two respective locations being opposite to a respective end of the back wall (13).

5. A tape cassette case according to any one of the preceding claims wherein a pair of guide members (53a, 53b) are provided on the peripheral walls of the case adjacent to respective ends of the locking means (30), each of the guide members (53a, 53b) being able to receive a respective rail of a means for stacking, securing together and transporting a plurality of tape cassette cases.

6. A tape cassette case according to any one of the preceding claims wherein edges of the peripheral walls are provided with shoulders (52a, 52b), so that when the main and cover walls (11, 12) are brought together on closing the case, the shoulder (52a) of the main wall (11) interlocks with the shoulder (52b) of the cover wall (12).

7. A tape cassette case according to any one of the preceding claims wherein outside surfaces of the main and cover walls (11, 12) are provided with recesses and/or ridges (60a, 61a) which are located so that when the cases are stacked on top of one another, the receses and/or ridges (60a, 61a) of the outside surface of the main wall (11) or the cover wall (12) of one case interlock with the recesses and/or ridges (60a, 61a) of the outside surface of the cover wall (12) or the main wall (11), respectively, of the adjacent case or cases in the stack.

8. A tape cassette case according to any one of the preceding claims wherein the main wall (11) of the cassette case has a take-up reel lock member (14) and a supply-reel lock member (15) extending from one face thereof.

**Patentansprüche**

1. Bandkassettenbehälter, der für die Lagerung einer Bandkassette geeignet ist,

mit einer Hauptwand (11), einer Deckwand (12) und Umfangswänden, die sich zumindest vom Umfang jeder der Haupt- und Deckwände (11, 12) aus erstrecken, welche derart verschließbar sind, daß eine durch die Hauptwand (11), die Deckwand (12) und die Umfangswände festgelegte Umschließung gebildet ist,

mit einer eine Rückwand (13) bildenden Gelenkeinrichtung, die einen Teil des Umfangs der Hauptwand (11) mit einem Teil des Umfangs der Deckwand (12) verbindet, mit einer an den Umfangswänden der Hauptwand (11) und der Deckwand (12) an einer der Gelenkeinrichtung gegenüberliegenden Stelle angeordneten Verriegelungseinrichtung (30), die ein an einer Umfangswand gleitbar angebrachtes Schieberteil (31) und zumindest ein von der anderen Umfangswand abstehendes vorstehendes Teil (38) aufweist, derart, daß bei geschlossenem Behälter das Schieberteil (31) in eine Schieberichtung gleiten kann, um mit dem zumindest einem vorstehenden Teil (38) in Anlage zu gelangen und dadurch die Haupt- und Deckwande (11, 12) zusammen zu verriegeln, wobei das Schieberteil (31) entgegen der einen Schieberichtung schiebbar ist, um das Schieberteil (31) von dem zumindest einen vorstehenden Teil (38) zu lösen und dadurch die Öffnung des Behälters zu ermöglichen, und mit einer Verriegelungs-Sicherungseinrichtung (33a, 33b, 35a, 35b) zur Vermeidung eines unbeabsichtigten Verschiebens des Schieberteiles (31),

dadurch gekennzeichnet,

daß das Schieberteil (31) von der genannten einen Umfangswand weg mittels einer Federeinrichtung (36) vorgespannt ist, die zwischen dem Schieberteil (31) und der genannten einen Umfangeswand angeordnet ist, und daß die Verriegelungs-Sicherungseinrichtung (33a, 33b, 35a, 35b) automatisch dann zur Anlage gelangt, wenn das Schieberteil (31) von der genannten einen Umfangswand weg vorgespannt ist, so daß das Schieberteil (31) zur Anlage an dem zumindest einen vorstehenden Teil (38) oder zur Lösung von diesem Teil lediglich dann verschoben werden kann, wenn es in eine Richtung entgegen der genannten Vorspannungsrichtung gedrückt wird.

2. Bandkassettenbehälter nach Anspruch 1, wobei das Schieberteil (31) auf einem Tragteil (34) angebracht ist, welches einen Teil der genannten einen Umfangswand bildet,

wobei das Schieberteil (31) auf dem Tragteil (34) mittels an dem Schieberteil (31) vorgesehener Flansche (32a, 32b), welche mit entsprechenden Flanschen an dem Tragteil (34) zusammenwirken, erzwungenerweise verschiebbar ist,

wobei die Flansche (32a, 32b) einen zusammenhängenden Teil des Schieberteiles (31) in der Schieberichtung bilden und längs des Umfangs des betreffenden Schieberteiles verlaufen

und wobei die entsprechenden Flansche an dem Tragteil (34) sowie die Flansche (32a, 32b) an dem Schieberteil (31), entsprechende miteinander zusammenwirkende Anschläge (33a, 33b) und Ausschnitte (35a, 35b) aufweisen, die aneinander anliegen, um ein Verschieben des Schieberteiles (31) in dem Fall zu verhindern, daß das Schieberteil (31) von der genannten einen Umfangswand weg vorgespannt ist.

3. Bandkassettenbehälter nach Anspruch 1 oder 2, wobei an den Umfangswänden eine zusätzliche Verriegelungseinrichtung vorgesehen ist, die einen rechteckigen Finger (50a) aufweist, der von einer der Umfangswände absteht und der einen an ihm gebildeten Vorsprung (50c) aufweist, und wobei der Finger (50a) über einen Ausnehmungsteil in der anderen Umfangswand bei geschlossenem Behälter gleitet, so daß der Vorsprung des betreffenden Fingers (50a) in eine Öffnung (51a) in den Ausnehmungsbereichen bei geschlossenem Behälter eingeführt wird.

4. Bandkassettenbehälter nach Anspruch 3, wobei die zusätzliche Verriegelungseinrichtung an zwei entsprechenden Stellen an den Umfangswänden vorgesehen ist und wobei die beiden entsprechenden Stellen einem entsprechenden Ende der Rückwand (13) jeweils gegenüberliegen.

5. Bandkassettenbehälter nach einem der vorhergehenden Ansprüche, wobei ein Paar von Führungsteilen (53a, 53b) an den Umfangswänden des Behälters neben den entsprechenden Enden der Verriegelungseinrichtung (30) vorgesehen ist und wobei jedes der Führungsteile (53a, 53b) eine entsprechende Schiene einer Einrichtung zur Stapelung, zur gemeinsamen Sicherung und zum Transport einer Vielzahl von Bandkassettenbehältern aufzunehmen gestattet.

6. Bandkassettenbehälter nach einem der vorhergehenden Ansprüche, wobei Kanten der Umfangswände mit Schultern (52a, 52b) derart versehen sind, daß bei zusammengebrachten Haupt- und Deckwänden (11, 12) bei Schließung des Behälters die Schulter (52a) der Hauptwand (11) mit der Schulter (52b) der Deckwand (12) ineinandergreift.

7. Bandkassettenbehälter nach einem der vorhergehenden Ansprüche, wobei die Außenseiten der Haupt- und Deckwände (11, 12) mit Ausnehmungen und/oder Erhebungen (60a, 61a) versehen sind, die so angeordnet sind, daß bei übereinander gestapelten Behältern die Ausnehmungen und/oder Erhebungen (60a, 61a) der Außenseite der Hauptwand (11) oder der Deckwand (12) eines Behälters mit dem Ausnehmungen und/oder Erhebungen (60a, 61a) der Außenseite der Deckwand (12) bzw. der Hauptwand (11) des bzw. der im Stapel benachbarten Behälters/ Behälter ineinander-greifen.

8. Bandkassettenbehälter nach einem der vorhergehenden Ansprüche, wobei die Hauptwand (11) des Kassettenbehälters ein Aufwickelspulen-Verriegelungsteil (14) und ein Abwickelspulen-Verriegelungsteil (15) aufweist und wobei diese Teile von einer Seite aus abstehen.

## Revendications

1. Boite à cassette de bande qui convient pour conserver une cassette de bande, la boite à cassette de bande comportant: une paroi principale (11), une paroi de couvercle (12) et des parois périphériques qui s'étendent à partir d'au moins une partie de la périphérie de chacune de la paroi principale et de la paroi de couvercle (11, 12), les paroi (11, 12) pouvant être fermées pour former une enceinte définie par la paroi principale (11), la paroi de couvercle (12) et les paroi périphériques; un dispositif à charnière formant une paroi arrière (13) et reliant une partie de la périphérie de la paroi principale (11) à une partie de la péripherie de la paroi de couvercle (12), un dispositif de verrouillage (30) disposé sur les parois périphériques de la paroi principale (11) et de la paroi de couvercle (12) dans une position opposée au dispositif à charnière, le dispositif de verrouillage (30) comportant une pièce à glissière (31) montée pour coulisser sur une paroi périphérique et au moins un bossage (38) en saillie sur l'autre paroi périphérique de manière que la boite est fermée, la pièce à glissière (31) puisse coulisser dans un sens de coulissement pour s'engager avec ledit au moins bossage (38) verrouillant ainsi la paroi principale et la paroi de couvercle (11, 12) ensemble, la pièce à glissière (31) pouvant glisser dans le sens opposé audit sens de coulissement pour dégager la pièce à glissière (31) dudit au moins un bossage (38), permettant ainsi l'ouverture de la boite, et un dispositif de maintien de verrouillage (33a, 33b, 35a, 35b) pour empêcher la pièce à glissière (31) de coulisser par inadvertance; caractérisée en ce que la pièce à glissière (31) est rappelée à l'opposé de ladite paroi périphérique par un dispositif à ressort (36) disposé entre la pièce à glissière (31) et ladite paroi périphérique et ledit dispositif de maintien de verrouillage (33a, 33b, 35a, 35b), s'engageant automatiquement quand la pièce à glissière (31) est rappelée à l'opposé de ladite paroi périphérique de manière que la pièce à glissière (31) ne puisse coulisser, pour engager ou dégager ledit au moins un bossage (38) que lorsque la pièce à glissière (31) est poussée dans un sens opposé audit sens de rappel.

2. Boite à cassette de bande selon la revendication 1, dans laquelle la pièce à glissière (31) est montée sur une pièce support (34) qui fait partie de ladite paroi périphérique, la pièce à glissière (31) étant contrainte à coulisser sur la pièce support (34) par des rebords (32a, 32b) sur la pièce à glissière (31) coopérant avec des rebords correspondant sur la pièce support (34), les rebords (32a, 32b) formant une partie intégrante et se prolongeant sur la périphérie de ladite pièce à glissière (31) dans le sens de coulissement et lesdits rebords correspondants sur la pièce support (34) et le rebord (32a, 32b) sur la pièce à glissière (31) comportant des bossages respectifs (33a, 33b) des encoches (35a, 35b) qui s'engagent les uns dans les autres pour éviter un coulissement de la pièce à glissière (31) lorsqu'elle est rappelée à l'opposé de ladite paroi périphérique.

3. Boite à cassette de bande selon la revendication 1 ou 2, dans laquelle un dispositif de verrouillage supplémentaire est prévu sur les paroi périphériques, le dispositif de verrouillage supplémentaire comportant un doigt rectangulaire (50a) en saillie sur l'une des parois périphériques et sur lequel est formé un bossage (50c), le doigt (50a) glissant sur une partie en retrait de l'autre paroi périphérique quand la boite est fermée de manière que le bossage du doigt (50a) pénètre dans une ouverture (51a) des parties en retrait à la fermeture de la boite.

4. Boite à cassette de bande selon la revendication 3, dans laquelle le dispositif de verrouillage supplémentaire est prévu dans deux positions respectives des parois périphériques, chacune des deux positions respectives étant opposée à une extrémité respective de la paroi arrière (13).

5. Boite à cassette de bande selon l'une quelconque des revendications précédentes, dans laquelle deux pièces de guidage (53a, 53b) sont prévues sur les paroi périphériques de la boite près des extrémités respectives du dispositif de verrouillage (30), chacune des pièces de guidage (53a, 53b) pouvant recevoir un rail respectif d'un dispositif d'empilage, pour fixer ensemble et transporter plusieurs boites à cassette de bande.

6. Boite à cassette de bande selon l'une quelconque des revendications précédentes, dans laquelle les bords des paroi périphériques sont prévus avec des épaulements (52a, 52b) de manière que lorsque la paroi principale et la paroi de couvercle (11, 12) sont amenées l'une contre l'autre à la fermeture de la boite, l'épaulement (52a) de la paroi principale (11) se verrouille avec l'épaulement (52b) de la paroi de couvercle (12).

7. Boite à cassette de bande selon l'une quelconque des revendications précédentes, dans laquelle les surfaces extérieures de la paroi principale et de la paroi de couvercle (11, 12) sont prévues avec des logements et/ou des nervures (60a, 61a) qui sont disposés de manière que lorsque les boites sont empilées les unes au-dessus des autres, les logements et/ou les nervures (60a, 61a) de la surface extérieure de la paroi principale (11) ou de la paroi de couvercle (12) d'une boite se verrouillent avec les logements et/ou les nervures (60a, 61a) de la surface extérieure de la paroi de couvercle (12) ou de la paroi principale (11) respectivement de la boite ou des boites voisines dans la pile.

8. Boite à cassette de bande selon l'une quelconque des revendications précédentes, dans laquelle la paroi principale (11) de la boite à cassette comporte une pièce (14) de blocage de bobine réceptrice et une pièce (15) de blocage de bobine débitrice, en saillie sur l'une de ses faces.

FIG. 1

FIG. 3

FIG. 2

0 081 933

## FIG. 4A

33a  34
31
36  37

## FIG. 4B

33a  34
31
⇐ PUSH
36  37

## FIG. 5

12
52a  52b
11

## FIG. 6

61  12  54b
61a
62
60
60a  54a
31
53b
63
11  53a

## FIG. 7

58  55
56  57

3